# EUROPEAN PATENT SPECIFICATION

(11) **EP 2 150 649 B1**
(45) Date of publication and mention of the grant of the patent: **12.09.2012**
(21) Application number: 07747735.4
(22) Date of filing: 09.05.2007
(51) Int. Cl.: D06M 15/17

(54) **CELLULOSE FIBRE TEXTILES CONTAINING NANOLIGNINS, A METHOD OF APPLYING NANOLIGNINS ONTO TEXTILES AND THE USE OF NANOLIGNINS IN TEXTILE PRODUCTION**
CELLULOSEFASERTEXTILIEN MIT GEHALT AN NANOLIGNINEN, VERFAHREN ZUM AUFBRINGEN VON NANOLIGNINEN AUF TEXTILIEN UND VERWENDUNG VON NANOLIGNINEN BEI DER TEXTILHERSTELLUNG
TEXTILES EN FIBRES DE CELLULOSE CONTENANT DES NANOLIGNINES, PROCÉDÉ D'APPLICATION DE NANOLIGNINES SUR DES TEXTILES ET UTILISATION DE NANOLIGNINES DANS LA PRODUCTION TEXTILE

(43) Date of publication of application: 10.02.2010
(73) Proprietor: Institute of Natural Fibres and Medicinal Plants, 60-630 Poznan (PL)
(72) Inventor: KOZLOWSKI, Ryszard, PL-61-606 Poznan (PL); ZIMNIEWSKA, Malgorzata, Pl-62-081 Przezmierowo (PL); BATOG, Jolanta, PL-60-103 Poznan (PL)
(74) Representative: Twardowska, Aleksandra
(86) International application number: PCT/PL2007/000025
(87) International publication number: WO 2008/140337

(56) References cited:
- EP-A- 0 445 076
- GB-A- 656 610

## Description

The subject of the present invention are natural cellulose fibre textiles containing nanolignins, a method of applying nanolignins onto the textile and the use of nanolignins in the production of textiles which protect against UV radiation, characterised in that they possess antibacterial and antistatic properties. The use of lignins in a nanolignin dispersion in the finishing process of textiles gives natural cellulose fibre products new, multifunctional properties. Natural cellulose fibre products with nanolignins applied to their surface comprise an effective anti-UV barrier and are comfortable as well as beneficial to the human organism.

Natural fibers like hemp and flax contain in their chemical composition natural pigments and lignin, which are natural UVR absorbers and ensure good protection against UV. Lignin together with cellulose and hemicellulose are the main structural polymers in the cell walls of higher plants. Lignin content varies from 15 to 30%, and distribution is different in different layers of cellular wall and is correlated with the physiological function of the layer.
Lignin content in flax fibers is between 0.6-5.0 % and in hemp fibers between 3.5-5.5%. The term "lignin" is a collective name referring to a group of highly polymerized compounds with a similar character and chemical properties, aromatic compounds containing methoxyl -OCH₃, carbonyl -CO and hydroxyl -OH groups.
It is a polymer synthesized from three monomers - p-coumaryl, coniferyl and sinapyl alcohols [1]. They form a chain of nine carbon atoms arranged in phenolic ring with lateral propane chain. These units either have no or have one or two methoxyl groups attached to the phenolic group in ortho position.

The extent to which a woven or a knitted fabric transmits, absorbs, or reflects UV radiation determines its sun-protection properties. The transmission, absorption and reflection are in turn dependent on the fiber, fabric construction (thickness and porosity) and finish [6, 10].
Problem of choice making of the best methods for UV protection factor of textiles was investigated by Gambichler *et al*.[7]. To compare the relationship between in vitro tests and in vivo tests of UPF solar simulators were used for determination of the minimal erythema dose (MED), applied to 30 different summer textiles. As spectrophotometric measurements of a textile may generally yield lower UPF than those obtained under average field conditions, the in vitro test method provides 'safe' UPF values representing a 'worst-case scenario'. In contrast to in vitro testing, in vivo methods are much more expensive and time-consuming. Thus, with respect to practicality, spectrophotometer measurements seem to be most suitable for the evaluation of UV protection of textiles. The barrier or protection factor of flat textile products against ultraviolet radiation determined by the spectrophotometric method is described according to international standards, including the British Standard [3] and the Australian Standard [2, 9], European Standard [5].
Several factors determine how effective garments are at reducing UVR [13]:
*Fiber properties -* among the natural fibers, hemp, flax and grey cotton offer good protection because the natural pigments, lignin, waxes and pectin act as UVR absorbers. The horizontal cross-section of hemp fiber is in the shape of either an irregular triangle, polygon or irregular circle. The molecular structure is more loose and it has more prisms and whorls, so products made from hemp fibers are able to dissipate both sound and optical waves. The inspection report of the Physical Institute of China Academy of Science proved that moderate hemp cloth can block 95% of the ultraviolet rays. In comparison, scoured and bleached cotton offers poor protection. Wool provides maximum protection, while silk is intermediate between the two fibers [13]. Acrylic shows low UPF due to the dipole interactions of the nitrile group. The delustrant TiO₂ modifies the reflection and absorption of the UV rays by acrylic fibers, leading to increased scattering. Dull, pigmented viscose fibers (such as ENKA SUN by Azko Nobel/Lenzing) for example show lesser transmittance (high absorption) than lustrous fibers.
*The count of yarn -* Crews *et al* investigated influence of yam count in fabric on UV protection [4]. The data reveals a negative correlation between thread count and UPF.
   The higher the thread count, the lower is the degree of protection provided by the fabric. The plain weave fabric with a thread count of 205 had a UPF of 3.2 whereas the twill weave fabric with a thread count of 81 had a UPF of 19.2 with the sateen weave between the two with a thread count of 106 and a UPF of 13.3. A possible explanation for the negative correlation between thread count and UPF is the fact that fabrics that are thinner tend to contain finer yarns and therefore have the highest thread counts. *Composition of the fabric -* lightweight, loosely woven fabrics, which are normally preferred in hot outdoor situations, ironically provide minimum protection. The UPF improves as the weave becomes tighter and the fabric weight goes up. Porosity and cover factor of the fabric have been shown to be the important factors in sun protection. Less UVR passes through tightly woven or knitted fabrics.
   Linen fabrics with a low mesh percentage, i.e., fabrics with a compact, dense structure, have a very high UPF and provide excellent protection against the harmful ultraviolet radiation [14].
   It is possible to improve the crease resistance and hand of flax and hemp fabrics by treatment with liquid ammonia. This treatment imparts a pleasantly soft hand to these fabrics, making them more resistant to creasing and easier to maintain. The treatment with liquid ammonia (a two-step process) produces, among other results, compacting of the fabric structure with an additional effect of significant improvement of the UPF. *Moisture content -* many fabrics have lower UPF gratings when wet. The drop in UPF rating depends on the type of fabric and the amount of moisture it absorbs when wet. Gambichler *et al.* [8] investigated "dry" and saturated with tap and salt water summer fabrics, which were assessed spectrophotometrically (*in vitro*). *In vitro* UPF values were the same for the fabrics were saturated with tap water and for ones saturated with salt water. Saturating the fabrics with water had different effects on the UPF, UVA transmission, and UVB transmission values in comparison to dry fabrics. For linen, viscose and polyester fabrics, UPF significantly increased. For the cotton fabrics and the polyester + TiO₂ fabrics, UPF significantly decreased. For the modal + TiO₂ fabrics and the polyester crepe + TiO₂ fabrics, UPF significantly increased. From the *in vivo* testing, the MED (the minimal erythema dose) of the "hydrated unprotected" skin was not different than the MED of "dry unprotected skin."
   Satins offer better protection than twills, and twills offer better protection than plain weaves. The structures with a lower level of protection capability are those with a lower average connection coefficient (ACC) (defined as the total of connecting points in both warp and weft by the total number of connecting squares). "Z" structure among the plain weaves has a higher ACC and gives lower solar protection. Neves [11]explains that the more interwoven structures have more sinkage areas (corresponding to the thread interlacing) that can create preferential interlacing channels of ultraviolet radiation.
*Tension -* stretching the fabric may cause a decrease in the UPF rating. This is common in knitted or elasticized fabrics and the wearer should be careful to select the correct size.
*Design -* as well as considerations of fashion and comfort, selecting garments that are sensible designed for sun protection can make a large difference to overall UVR exposure. Garments that provide more body coverage offer more protection. *Condition -* unless otherwise stated, UPF ratings are established for fabrics that are new. The UPF rating of many cotton-based fabrics can improve over the "new" rating after they have been washed at least once. Shrinkage in the fabric closes small gaps between the threads and allows less UVR to pass through. However, old, threadbare or faded garments may have a lower UPF rating.
   There are two possibilities of reducing UV transmittance by fabrics: by reducing the porosity through modification of construction or by improving the absorption and reflection properties of the fabric. The construction may be improved by determining the optimum relationship between the number of yarns in the warp and the weft for a given yarn count. Some parameters that affect the UV absorption characteristics are discussed below.

Transmission through the fibers can be effectively reduced by use of selected dyes, fluorescent whitening agents and by UV absorbers. These products have chromophoric systems that absorb very effectively in the UV region, enabling them to maximize the absorption of UV radiation on textiles.
Many dyes absorb UV radiation. Darker colors (black, navy, dark red) of the same fabric type will usually absorb UVR more than light pastel shades, and consequently will have a higher UPF rating. As the spectral region of all dyes extends to the UV region (290-400nm), all dyes act as UV absorbers. Studies show that for a given color, the darker the shade, the higher the protection [13]. In general, navy, black and olive shades would provide better protection. Some recent studies report an increase in the UV protection of cotton textiles, when dyed with selected direct, vat or reactive dyes.
A study [12] on the ability of natural dyestuffs to block UV shows that application of natural dyes to linen and hemp fabrics very often gives better results compared with synthetic dyes in the same color ranges used on the same fabrics (Table 1).

**Table 1. Comparison of UPF results obtained on samples dyed with natural and synthetic dyes**

| **Fabric** | **Colour** | **Natural Dye** | | **Synthetic Dye** | |
|---|---|---|---|---|---|
| | | **Dyestuffs** | **UPF** | **Dyestuffs** | **UPF** |
| **Hemp** | Dark yellow | Tumeric premordant + copper | 25 | Yellow 2GL | 25 |
| **Linen** | Olive yellow | Tumeric premordant + copper | 30 | Yellow 2GL | 25 |
| **Linen** | Yellow | Tumeric premordant | 25 | Direct yellow | 25 |
| **Linen** | Brown | Knotweed | 35 | Direct orange + BrownGLM | 20 |
| **Linen** | Brown | Logwood | 30 | Brown BT | 15 |
| **Linen** | Brown | *Coreopsis tinctoria* | 50 | Brown BT | 15 |

In the case of the brown dyestuffs, the differences between natural knotweed, logwood and particularly *Coreopsis tinctoria*, and the synthetic dye Brown BT applied to the same linen samples, are significant.

UV absorbers include all organic and inorganic compounds that preferentially absorb UV radiation [13]. These compounds have negligible absorption in the visible region and consequently a high light fastness. UV absorbers have to be distributed monomolecularly in the substrate for maximum effect. In addition, they should meet other criteria such as:
○ absorb effectively throughout the UV region (280-400 nm)
○ be UV stable
○ dissipate the absorbed energy in such a way that there is no degradation or color change in the protected medium.
UV absorbers act on the substrate in several ways: by converting electronic excitation energy into thermal energy via a fast, reversible intermolecular proton transfer reaction; functioning as radical scavengers; and functioning as singlet oxygen quenchers.

All organic UV absorbers applied industrially to textile materials in wet processing are derivatives of one of the three different structures: o-hydroxybenzophenone, o-hydroxyphenylbenzotriazole, o-hydroxyphenyltriazine [13]. Of the inorganic substances with UV absorbing characteristics, titanium dioxide deserves special mention. For all common fibers except acrylics, UV absorbers are now available that are like colorless dyes and are applicable with dyes by most of the usual methods. Separate application procedures are not needed. Care is needed only when they are applied with fluorescent whitening agents (FWAs). Australian researchers have developed a finish technology that substantially increases the UPF of light garments. Clariant is marketing the technology under the name Rayosan. The dyer or finisher can apply the Rayosan process on yarn, knitwear or woven fabrics using traditional textile finishing processes and equipment. The products are available for use on cellulosics, polyamides and wool (with reactive dyes) and for PET and acetate fibers (with disperse dyes). These products reportedly have no negative effect on the optical brighteners, as they do not absorb the UVR required for the excitation of fluorescence. Ciba Geigy is marketing UV absorbers for different substrates under the brands Cibafast and Cibatex. These can also be applied to the fabric by either exhaust or pad batch method. Tinofast Cel is a new product capable of giving a UPF of 40+.
Non-reactive UV absorbers based on oxalic anilides, triazine or triazol compounds, salicylic acid esters, substituted acrylonitrile or nitrilo-hydrazones, emulsifying agents, water and polysiloxanes have also been reported [13].

Lately, several Japanese companies have introduced specialized coatings for providing UV protection [13]. Ipposha Oil Industries of Japan has developed a homopolymer/copolymer-based high-molecular-weight coating for imparting prolonged light resistance and UV screening to fabrics. Toyota R&D Lab has also used polymers to impart improved UV shielding and abrasion resistance properties to textiles. The process is based on dispersing organic alkoxy silanes, inorganic or organic salts or alkoxides of Ti, Mg, Al, Si etc., and inorganic or organic polar solvents followed by moulding. Toray Industries has developed an immersion technique for making antibacterial UV-blocking fabrics.
A polyester fabric was immersed in ethanol containing 3% ferulic acid, dried and heated at 190°C to give a fabric showing antibacterial activity against *Staphylococcus aureus* and UV absorption of up to 98.5%.

The document GB 656 610 A (KERMATEX LTD) (29-08-1951) concerns a textile padded with an aqueous solution of caustic lignin and an emulsion of an organo-silicon ester. In the patent description a natural or synthetic rubber latex is used. No other polymer is proposed to replace rubber latex. There is also no reference in this document as the possible use of a silicone elastomer in the range of concentration to improve the fixation of the lignin.
In the document EP-A-0 445 076 (CIBA GEIGY AG [CH]) (04-09-1991) discloses the use of a lignin derivative (formaldehyde condensate of lignin sulfonate sodium salt) in the production of textiles which are UV-proof. The treated textiles also have antibacterial (1) and antistatic (2) properties, as a biocide (1) and propylene glycol (2) enter in the formulation of the aqueous treatment.
In the patent application CA2506108 (published 2006-11-09) a special clothing for the exposure of the user's body to portions of sunrays and/of daylight in cold or cool conditions was presented. Said clothing protects the user's body against cool or cold weather, while it passes some portions of the UV rays and possibly visible light, to help user get a tan and possibly use says or daylight. Said clothing may be partially or fully see-through or non-see-through. It may be made of one or a few layer(s) of transparent, opaque, translucent or light-transmitting, flexible material with or without UV protection coating or layer(s) of fiber, and/or fabrics. Said clothing may be made of fabrics that pass some limited portions of the UV rays or spectrum, regardless of its behavior to the visible light. Said clothing may be made in any forms of body coverings, including underwear, pants, shirts, jacket, gloves, hosiery, shoes, etc. and more probably employs light-transmitting flexible material such as clear and/or non-clear vinyl, polyurethane, and/or other plastics, polyester fabrics and meshed fabrics that let through portions of the visible light and the UV.
In the patent application DE202006010168U (published 2006-10-26) the mobile ultraviolet cover for e.g. baby carriage, has fasteners distributed at circumferential line, where cover is manufactured from textile plain cloth of variable size and form, and plain cloth is produced from natural fiber were presented. The cover has fasteners such as twine or ribbon, distributed at a circumferential line, where the fasteners are suitable to produce any detachable connections, and the cover is manufactured from textile plain cloth of variable size and form. The plain cloth is produced from natural fiber, where the plain cloth has an ultraviolet (UV) protection factor of 80 according to UV standard 801.
In the patent application KR20040011068 (published 2004-02-05) fiber and fabric containing titanium dioxide and potassium tripolyphosphate, showing good air permeability and imparting enhanced properties of comfort to wearer while having good UV screening effect were presented. Fiber obtained by adding titanium dioxide having a UV reflecting effect and dispersants is provided. Fabrics prepared with the fiber show good air permeability and impart enhanced properties of comfort to the wearer while having good UV screening effect. The fiber having ultraviolet rays-screening effect contains less than 1% by weight of inorganic titanium dioxide having a mean particle size of 100nm or less and potassium tripolyphosphate. When a fabric contains more than 50% of fiber having a UV reflecting effect of fibers and has the opening rate of 0.7 to 25%, the fabric has a UV protection factor of 40% or more. The addition of potassium tripolyphosphate to fiber during the manufacture of fiber prevents coagulation of titanium dioxide and improves spinning productivity, fiber color and abrasion of a thread passage.
In the patent application CN1676686 (published 2005-10-05) protein-containing functional fiber was presented. The functional fiber is made up of protein, high polymer and the substances containing non-metallic element. Among these, the protein takes up A of the total quantity, the high polymer taking up B and the substances containing non-metallic element taking up C. Then we get 1<=A<=67, 10<=B<99 and 0<C<=23. This invention also publishes the producing method of this fiber. This fiber makes the skin feeling comfortable and has good wetness conductivity. Also, it has high ratio of bacteriostasis and occultation, and it can send out far IR, producing high ratio of negative ions. What is more, it has the UV-absorbing ratio of 99.8% and it can absorb the Hertz wave and it offers radiation protection, and so on.
In the patent application US2003127633 (published 2003-07-10) UV absorbing mixture with textile fiber affinity was presented. The invention relates to a mixture, comprising (A) 10 to 90 wt. % of at least one C6 to C18 alkyl ester, or C5 to C8 cycloalkyl ester of 2-cyano-3,3-diphenylacrylic acid and (B) 90 to 10 wt. % of at least one further compound, with at least one UV absorption maximum in the range 280 to 450 nm and structurally different from compound (A). Said mixture is suitable for the protection of human skin from damaging UV radiation and for the protection of colored textile materials from color fading. In the patent application TW577943 (published 2004-03-01) fiber with UV-shielding effect and fabric made from the same were presented. Disclosed are a fiber with UV-shielding effect made by adding 0.5-1.0 wt% of inorganic titanium dioxide micro particles having an average particle size of 1-100 nm into the fiber to endow the resulting fiber with UV-shielding effect and a fabric made from such a fiber with UV-shielding effect. The fiber with UV-shielding effect comprises 50-100 wt% of the total weight of the fabric and the fabric has a porous ratio of 5-11% and an UPF (UV protection coefficient) exceeding 40%.
In the patent descriptions US5914444 (published 1999-06-22), US5938793 (published 1999-08-17) process for increasing the sun protection factor of cellulosic fibre materials by treating the cellulosic fibre materials with at least one direct dye and at least one UV absorber was described.
In the patent description EP0717140 (published 1996-06-19) a method for the treatment of textile fibers was described. A method for the treatment of a textile fiber to reduce the amount of UV light passing through a fabric produced from said treated fiber comprising treating a textile fiber with 0.1 to 6.0% by weight on the fiber, of a UV absorber of the formula (1) <CHEM> wherein A is the radical of a UV absorber, B is the radical of a UV absorber or is a water-solubilizing group and X is F or Cl, and textile fabrics and articles of clothing produced from said fabrics. Fabrics prepared from the treated fibers are useful in making clothing which provides protection against UV radiation for skin which is covered by the clothing, especially lightweight summer clothing.
In the patent descriptions US5700295 (published 1997-12-23), US5786475 (published 1998-07-28) UV absorbers, their preparation and the use thereof were described. The invention relates to compounds of formula (1) wherein the variables have the meanings given in the claims. The compounds are suitable for use as UV absorbers for the photochemical stabilization of undyed, dyed or printed textile fiber materials and for enhancing the sun protection factor thereof.
In the patent description JP8113819 (published 1996-05-07) netlike structure-having antistatic fiber and its production were described. This fiber is composed of mixed fibers containing at least an ethylene-vinyl alcohol copolymer and an ester polymer, and has a three dimensional netlike structure. The fiber is extremely fibrillated and excellent in antistaticity, soil-proofing properties and bacterial, barrier properties and has high strength and dyeability. Accordingly, the fiber can be used as woven cloth, knit cloth or non-woven cloth, and it is applicable in a wide range of usage, such as clothes, warm-keeping material, artificial leather, absorbent for sanitary product, protection clothes, curtain, sheet, wiper, filter and house wrap.
In the patent application WO03046273 (published 2003-06-05) anti-bacterial textiles fixed with nonagglomerating nanometer silver and methods of making the same were described. The present invention discloses anti-bacterial textiles fixed with nonagglomerating nanometer silver, and methods of making the same. The textiles are textile materials of animal, vegetable, or synthetic fibers, of which, between the fiber units and on the surfaces of the fibers are fixed firmly nonagglomerated superfine sliver particles, which are size of 1-100 nm. The superfine sliver particle has surface layer of silver oxide thickened 1-8 nm, and core of metal silver. The anti-bacterial textiles of present invention have remarkably antibactericidal function and broad-spectrum antiseptic capability. Moreover, the textiles are innoxious, nonirritating, non-allergic, and have no drugresistance. The antibacterial efficacy becomes stronger as the textiles come in to contact with water. They are suitable for the uses of medical treatment or health protection.
In the patent description CN1123349 (published 1996-05-29) a method for production of long lasting antibaterial, healthy and fragrant type fiber textiles was presented. The fiber fabric product integrating high-effection, washability, body-building, beautifying and fragrancy into one body is made up by using fiber fabric as base material, using hydrophilic finishing agent, anti-bacterial finishing agent and health-care perfumed finishing agent as main raw materials which are passed through such processes of modifying and grafting, etc. ADVANTAGE- has the functions of promoting blood circulation of human body, enhancing metabolism, protecting skin and moistening it.
In the patent application KR20020006059 (published 2002-01-19) functional double-textile and manufacturing method thereof were presented. Two textiles are adhered to both sides of the adhesive film having functionality respectively. The functional double-textile is obtained by a process containing the steps of: coating a base with adhesive paste added functional material; semi-drying to form film type; and then stripping the adhesive film from the base, followed by pressing and adhering two textiles to both sides of the film. The adhesive film has 0.07-0.1mm of thickness and 5-30wt.% of moisture content. The functional material is at least one selected from the group containing aromatic agent, antibacterial agent, deodorizing agent, antistatic agent, far infrared radiating material, UV blocking agent and fire proofing agent.
In the patent application DE10343308 (published 2005-04-21) surface-functionalized composite textile materials, e.g. for clothing or decorative articles, obtained by coating flexible fibrous carrier with (semi)metal oxides and other water-insoluble inorganic compounds were presented. Use of composite materials (I) comprising coating on flexible fibrous carrier, where the coating contains (A) metal, semimetal and/or mixed metal oxide(s) obtained by a sol-gel method and (B) water-insoluble inorganic compound(s). - Use of composite materials (I) comprising coating on flexible fibrous carrier is claimed as textiles, where the coating contains (A) metal, semimetal and/or mixed metal oxide(s) obtained by a sol-gel method and (B) water-insoluble inorganic compound(s), not obtained by a sol-gel method, containing at least one group III-V non-transition and/or group I-VIII transition metal and at least one of carbon, nitrogen, oxygen, silicon, phosphorus and sulfur (provided that (B) do not consist entirely of pigments). - An independent claim is included for surface-functionalized textiles, comprising a composite (I) as above, additionally containing (within, on and/or under the coating) one of more agents (C) selected from flame retardants, UV-absorbers, IR-reflectors, dyes, colored pigments, preservatives, medicinal active agents, water repellents and/or oil repellents; and articles of clothing preparation of (I).
In the patent description CA2274819 (published 1999-04-22) a method for treating cellulosic shaped bodies was presented. The invention relates to a method for treating cellulosic shaped bodies which are formed from a solution of cellulose in an aqueous tertiary amine oxide, especially fibers. The shaped bodies are brought into contact with an aqueous solution of a textiles auxiliary in alkaline conditions, said textiles auxiliary supporting two reactive groups. The invention is characterized in that a compound of formula (I), wherein X represents halogen, R=H or an ionic radical and n=O or 1, or a salt of this compound is used as the textiles auxiliary. The invention also relates to the use of compounds of this formula to reduce the tendency to fibrillate and increase the UV-absorption of solventspun fibers.

Despite the above described research dedicated to producing textiles which are an UV radiation barrier as well as antibacterial and antistatic textiles, there is still a real need to obtain an effective solution for the production of textiles which are efficient barriers for ultraviolet radiation, as well as being comfortable and beneficial for the human organism.

The goal of the present invention is to make use of natural polymers, nano-structured lignins, which can be used to produce cellulose textiles which protect against UV radiation, which are also antibacterial and antistatic.

The realisation of the above goal and the solution of the problems described in the state of the art, connected with the production of natural cellulose fiber textiles which protect against UV radiation and possess antibacterial and antistatic properties, have been achieved by the present invention.

The subject of the present invention is a cellulose fibre textile, characterised in that it contains nanolignins, wherein the nanolignins are applied onto the textiles using a padding technique with a nanolignins solution with an auxiliary agent comprised of a silicone emulsion, at a temperature of 18 - 20°C, for a duration of 2 to 5 minutes, where after the textiles are wrung and repadded for another 8 to 10 passages, where after each padding session is followed drying at a temperature of 40 - 60°C, wherein the auxiliary agent consists of an emulsion containing silicone elastomer with a concentration ranging from 5 to 25 g/1.
Preferably, the raw material consists of natural cellulose fibers.
Preferably, the nanolignins applied onto the textiles provide a barrier which protects against UV radiation.
Preferably, the nanolignins applied onto the textiles provide antibacterial and antistatic properties.
Preferably, it is designed for clothing which protects against UV radiation, with antibacterial and antistatic properties, particularly for summer clothing and working clothes used in intensive sunlight environments.

The next subject of the present invention is a method of applying nanolignins to cellulose textiles, characterised in that the nanolignins are applied onto the textiles using a padding technique using nanolignins with an auxillary factor comprised of a silicone emulsion, at a temperature of 18 - 20°C, over a period of 2 to 5 minutes, where after the textiles are wrung out and repadded using 8 do 10 passages, where after each padding session they are dried at a temperature of 40 - 60°C, wherein the auxiliary agent consists of an emulsion containing silicone elastomer at a concentration of 5 to 25 g/l.
Preferably, the method used is the application of nanolignins onto natural cellulose fibers.

The next subject of the present invention is a use of nanolignins applied onto textile with a padding technique using a nanolignin solution with an auxiliary agent consisting of a silicone emulsion at a temperature of 18 - 20°C, over a period of 2 to 5 minutes, where after the textiles are wrung out and repadded using 8 do 10 passages, where after each padding session they are dried at a temperature of 40 - 60°C, in the production of clothing which protects against UV radiation, with antibacterial and antistatic properties, wherein the auxiliary agent consists of an emulsion containing silicone elastomer at a concentration of 5 to 25 g/l.
Preferably, the textiles are meant for use in summer clothing and working clothes used in intensive sunlight environments.
Preferably, it is designed for the manufacture lignocellulose materials which protect against UV radiation.
The attached figures facilitate a better explanation of the nature of the present invention.
**Figure 1** presents distribution of particles-size of nanolignin.
**Figure 2** presents an effect of linen fabric covered by nanolignin on UPF.
**Figure 3** presents an effect of linen fabric covered by nanolignin and silicone emulsion (after 8 passages) on UPF (wherein concentration of silicone emulsion - 50 g/l is out of the scope of the claims of this invention).
Below, there are example embodiments of the present invention defined above.

### Example 1. Covering the cellulosic textiles by nanolignin

The experiments of covering the cellulosic textiles (fabrics and non-woven) by nanolignin were conducted using a padding method. Nanolignin is used as water solution at concentration below 1 g/l. Emulsion containing silicone elastomer at concentration of 25 g/l was applied for better fixation of the nanolignin particles on cellulosic textiles.
Cellulosic textiles were immersed in nanolignin solution with silicone emulsion for 3 minutes and next wringed. The bath temperature was equal room temperature. Operation of padding was repeated 8 times. After each time of padding the textiles was dried in temperature 40°C.

### Example 2. Study on influence of nanolignin on UV barrier, antibacterial and antistatic properties of cellulosic fabrics

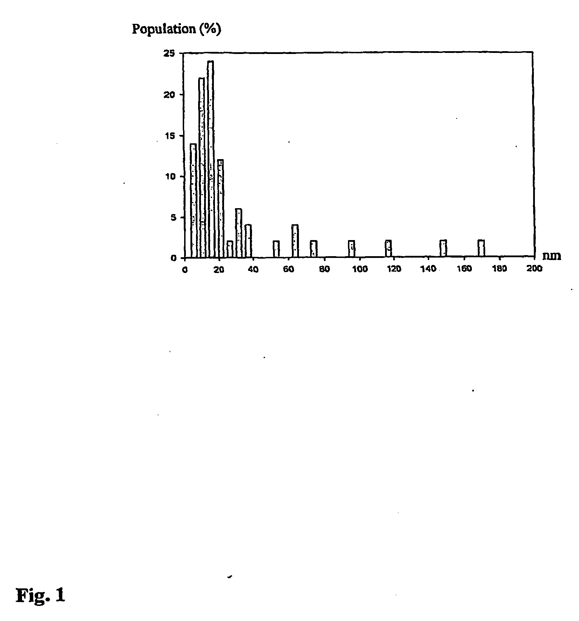

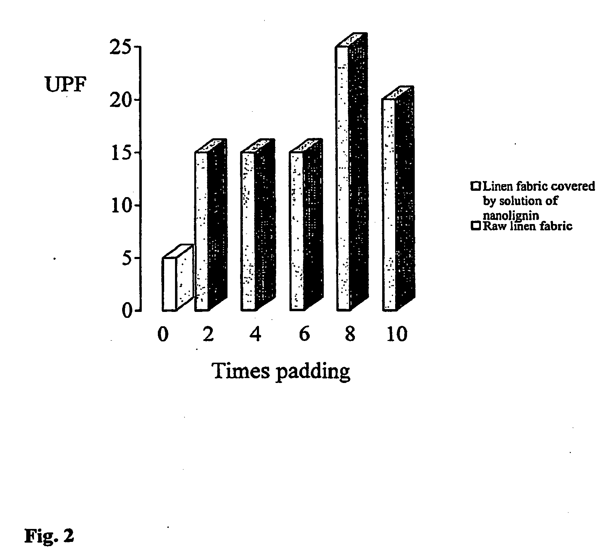

New way of improvement of UV barrier properties of cellulosic fabrics is application of nanolignin in finishing process.
Lignin with nano structure (Fig. 1) was obtained by ultrasonic treatment.
This patent describes the padding method of nanolignin on cellulosic textiles for barrier properties against UV radiation.
Nanolignin is used to manufacturing cellulosic fabrics with good UV blocking, antibacterial and antielectrostatic properties and lignocellulosic non-woven with UV barrier properties (Fig. 2-3).
Silicone emulsion with different level of concentration - 5, 25 and 50 g/l was applied for better fixation of the nanolignin particles on textiles (wherein 50 g/l is out of the scope of the claims of this invention).
The efficient of covering of textiles with nanolignin was evaluated by determination of the Ultraviolet Protection Factor.
Determination of the UPF of textiles covered by nanolignin was done according to EUropean Standard EN 13758-1:2001 for sun protection clothing with the use of Cary 50 Solascreen apparatus (Tab. 2) after each time of padding operation.

**Tab. 2. UPF Classification System [7]**

| UVR protection category | UPF range |
|---|---|
| Good protection | 15 to 24 |
| Very good protection | 25 to 39 |
| Excellent protection | 40 to 50, above 50 |

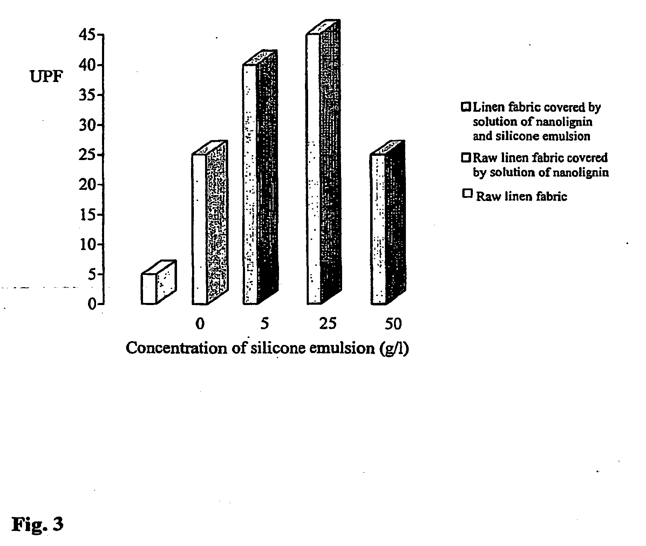

Treatment of linen fabric with a solution of nano structure Lignin improves the fabric UV barrier properties. Increase of amount of nanolignin on linen fabric resulted in higher level of Ultraviolet Protection Factor. The highest UPF was obtained after 8 passages and its result is 25 (Fig. 2).
Application of silicone emulsion as auxiliary agent for nanolignin solution, to better fix the nanolignin particles on linen fabric, improves the fabric UV protection factor in more effective way. The most efficient level of silicone emulsion concentration is 25 g/l and the best UPF result is 45 (Fig. 3).

The antibacterial properties of the products were evaluated by screening methods. Linen fabric with nanolignin is classified as antibacterial material - Tab. 3.

**Tab 3. Antibacterial properties of UV blocking of linen fabric covered by nanolignin**

| Type of bacteria | Antibacterial activity Screening tests acc. to AATCC 147-1998 | |
|---|---|---|
| *Corynebaclerium xerosis* | - | |
| *Bacillus licheniformis* | - | |
| *Micrococcus flavus* | - | |
| *Staphyloccocus haemolyticus* | - | Bactericidal activity |
| *Staphyloccocus aureus* | - | |
| *Klebsiella pneumoniae* | - | |
| *cherichia coli* | - | |
| *Pseudomonas aeruginosa* | - | |

Moreover, linen fabric with nanolignin is classified as antistatic material.
The antistatic properties of the products were evaluated according to PN-92/E-05203. Surface resistance of linen fabric covered by nanolignin is below 2x10¹⁰Ω (test conditions: relative humidity of air - 50%, temperature - 20°C).

The study on UV barrier properties was conducted also on hemp fabric as well as flax non-woven covered by nanolignin. Lignin with nano structure was padded on textiles. Nanolignin is used as water solution at concentration below 1 g/l. Silicone emulsion at concentration of 25 g/l. Textiles were immersed in nanolignin solution with silicone emulsion for 3 minutes and next wringed. The bath temperature was equal room temperature. Operation of padding was repeated 8 times. After each time of padding the textiles was dried in temperature 40°C.
Textiles coated by nanolignin have excellent UV protection and good washing resistant. Their air permeability remains the same. Nanolignin coating does not increase fabric stiffness.

Applying lignin as a UV barrier seems to be a very good solution for UV problems. Lignin is a natural polymer and its application to textiles does not decrease the hygienic properties of clothing, which is particularly important in summer. Using a lignin application instead of chemical UV absorbers, it is possible to reduce the amount of chemicals applied in the finishing processes of textiles, resulting in improved environmental protection aspects.
Application of nanolignin for cellulosic fabrics allows to obtain product with the following properties: UV blocking, antibacterial and antistatic.

### Conclusions:

1. Treatment of tested textiles with a solution of nano structure lignin significantly improves the fabric UV barrier properties.
2. The number of padding passages has an effect on ultraviolet protection factor of linen fabrics.
3. The silicone emulsion improves the nanolignin influence on efficiency of UV protection of linen fabric.
4. Linen fabric covered by nanolignin (with silicone emulsion) ensures: excellent UV protection, bactericidal activity and good electrostatic properties.
5. The nanolignin treatment of textiles does not worsen their physical and bio-physical properties.

### REFERENCES

1. Abreu H.S., Nascimento A.M., Maria M.A. (1999): Lignin structure and wood properties. Wood and Fibres Science, 31 (4), 426-433.
2. Australian/ New Zealand Standard AS/NZS 399: 1996 "Sun protective clothing - Evaluation and classification".
3. British Standard BS7914: 1998 "Method of test for penetration of erythemally weighted solar ultraviolet radiation through clothing fabrics".
4. Crews P.C., Kachman S., Beyer A.G. (1999): Influences on UVR Transmission of Undyed Woven Fabrics Textile Chemist and Colorist (Text. Chem. Color.). ISSN 0040-490x, Vol. 31, N°6, 17-26.
5. European Standard EN 13758-1:2001. Textiles - Solar UV protective properties - Part 1: Method of test for apparel fabrics
6. Gambichler T., Altmeyer P., Hoffmann K. (2002): Role of clothes in sun protection. Recent Results Cancer Res, 160, 15-25.
7. Gambichler T., Avennaete A., Bader A., Altmeyer P., Hoffmann K. (2001): Ultraviolet protection by summer textiles. Ultraviolet transmission measurements verified by determination of the minimal erythema dose with solar-simulated radiation. Br J Dermatol. Mar, 144(3), 484-9.
8. Gambichler T., Hatch K.L., Avermaete A., Altmeyer P., Hoffmann K. (2002): Influence of wetness on the ultraviolet protection factor (UPF) of textiles: in vitro and in vivo measurements. Photodermatol Photoimmunol Photomed. Feb, 18(1), 29-35.
9. Gies P.H., Roy C.R., Toomey S., McLennan A. (1998): Protection against solar ultraviolet radiation. Mutat Res. Nov, 9, 422(1), 15-22.
10. John Loy, the CEO of ARPANSA. Australian Radiation Protection and Nuclear Safety Agency (ARPANSA).
11. Neves, M. Neves, (2003): The influence of Interlacement Degree of Woven Fabrics on the Ultraviolet Protection Factor. Proceedings of the 3rd Autex Conference, Gdańsk, Poland.
12. Schmidt - Przewoźna K., Zimniewska M. (2005): The Effect of Natural Dyes Used for Linen Fabrics on UV - Blocking. Proceedings of International Conference ArchTex 2005 High Technologies in Textiles, Kraków.
13. www.resil.com/articles/articledevuvprot.htm Development in the Field of UV Protection of Textiles. Dr. Deepti Gupta Department of Textile Technology Indian Institute of Technology.
14. Zimniewska. M. (2001): Linen & Hemp Fabrics as a Natural Way of Sun Protection. Proceedings of the 2nd Global Workshop of the FAO European Cooperative Research Network on Flax and Other Bast Plants, "Bast Plants in the New Millennium", Borovets, Bulgaria.

## Claims

1. Cellulose fibre textile, **characterised in that** it contains nanolignins, wherein the nanolignins are applied onto the textiles using a padding technique with a nanolignins solution with an auxiliary agent comprised of a silicone emulsion, at a temperature of 18 - 20°C, for a duration of 2 to 5 minutes, where after the textiles are wrung and repadded for another 8 to 10 passages, where after each padding session is followed drying at a temperature of 40 - 60°C, wherein the auxiliary agent consists of an emulsion containing silicone elastomer with a concentration ranging from 5 to 25 g/l.

2. Textile according to Claim 1, **characterised in that** the raw material consists of natural cellulose fibers.

3. Textile according to Claim 1, **characterised in that** the nanolignins applied onto the textiles provide a barrier which protects against UV radiation.

4. Textile according to Claim 1, **characterised in that** the nanolignins applied onto the textiles provide antibacterial and antistatic properties.

5. Textile according to Claim 1, **characterised in that** it is designed for clothing which protects against UV radiation, with antibacterial and antistatic properties, particularly for summer clothing and working clothes used in intensive sunlight environments.

6. A method of applying nanolignins to cellulose textiles, **characterised in that** the nanolignins are applied onto the textiles using a padding technique using nanolignins with an auxillary factor comprised of a silicone emulsion, at a temperature of 18 - 20°C, over a period of 2 to 5 minutes, where after the textiles are wrung out and repadded using 8 do 10 passages, where after each padding session they are dried at a temperature of 40 - 60°C, wherein the auxiliary agent consists of an emulsion containing silicone elastomer at a concentration of 5 to 25 g/1.

7. A method according to Claim 6, **characterised in that** the method used is the application of nanolignins onto natural cellulose fibers.

8. Use of nanolignins applied onto textile with a padding technique using a nanolignin solution with an auxiliary agent consisting of a silicone emulsion at a temperature of 18 - 20°C, over a period of 2 to 5 minutes, where after the textiles are wrung out and repadded using 8 do 10 passages, where after each padding session they are dried at a temperature of 40 - 60°C, in the production of clothing which protects against UV radiation, with antibacterial and antistatic properties, wherein the auxiliary agent consists of an emulsion containing silicone elastomer at a concentration of 5 to 25 g/l.

9. Use according to Claim 10, **characterised in that**, the textiles are meant for use in summer clothing and working clothes used in intensive sunlight environments.

10. Use according to Claim 10, **characterised in that** it is designed for the manufacture lignocellulose materials which protect against UV radiation.

## Patentansprüche

1. Zellulosefasertextil **dadurch gekennzeichnet, dass** es Nanoligninen enthalten, wobei die Nanoligninen auf die Textilien mithilfe einer Nanolignin-Lösung mit einem Hilfsstoff auf Basis einer Silikon-Emulsion, bei einer Temperatur von 18 - 20°C, für eine Dauer von 2 bis 5 Minuten aufgetragen werden, wonach das Textil ausgewrungen wird und erneut demselben Prozess 8 bis 10 Mal unterzogen wird, und nach jedem Auftragen der Lösung wird das Textil bei einer Temperatur von 40 - 60°C getrocknet, wobei das Hilfsmittel aus einer Emulsion besteht, die Silikon-Elastomer mit einer Konzentration von 5 to 25 g/l enthält.

2. Textil nach Anspruch 1, **dadurch gekennzeichnet, dass** das Rohmaterial aus natürlichen Zellulosefasern besteht.

3. Textil nach Anspruch 1, **dadurch gekennzeichnet, dass** die aufgetragenen Nanoligninen einen Schutz vor UV-Strahlung bieten.

4. Textil nach Anspruch 1, **dadurch gekennzeichnet, dass** die aufgetragenen Nanoligninen antibakterielle und antistatische Eigenschaften haben.

5. Textil nach Anspruch 1, **dadurch gekennzeichnet, dass** es für Kleidung, die vor UV-Strahlung schützt, mit antibakteriellen und antistatischen Eigenschaften entworfen wurden, insbesondere für Sommerkleidung und Arbeitskleidung, die in Umgebungen mit intensiver Sonneneinstrahlung getragen wird.

6. Verfahren zum Auftragen von Nanoligninen auf Zellulosefasertextilien, **dadurch gekennzeichnet, dass** die Nanoligninen auf die Textilien mithilfe einer Nanolignin-Lösung mit einem Hilfsstoff auf Basis einer Silikon-Emulsion, bei einer Temperatur von 18 - 20°C, für eine Dauer von 2 bis 5 Minuten aufgetragen werden, wonach das Textil ausgewrungen wird und erneut demselben Prozess 8 bis 10 Mal unterzogen das Hilfsmittel aus einer Emulsion besteht, die Silikon-Elastomer mit einer Konzentration von 5 to 25 g/l enthält.

7. Verfahren nach Anspruch 6, die sich **dadurch gekennzeichnet, dass** Nanoligninen auf natürliche Zellulosefasern aufgetragen werden.

8. Verwendung von Nanoligninen, die auf das Textil als Nanolignin-Lösung mit einem Hilfsstoff auf Basis einer Silikon-Emulsion, bei einer Temperatur von 18 - 20°C, für eine Dauer von 2 bis 5 Minuten aufgetragen werden, wonach das Textil ausgewrungen wird und erneut demselben Prozess 8 bis 10 Mal unterzogen wird, und nach jedem Auftragen der Lösung das Textil bei einer Temperatur von 40 - 60°C getrocknet wird, bei der Herstellung von Kleidung, das vor UV-Strahlung schützt mit antibakteriellen und antistatischen Eigenschaften, wobei das Hilfsmittel aus einer Emulsion besteht, die Silikon-Elastomer mit einer Konzentration von 5 to 25 g/l enthält.

9. Verwendung nach Anspruch 10, **dadurch gekennzeichnet, dass** die Textilien für den Gebrauch für Sommerkleidung und Arbeitskleidung, die in Umgebungen mit intensiver Sonneneinstrahlung getragen wird, vorgesehen sind.

10. Verwendung nach Anspruch 10, die sich **dadurch gekennzeichnet, dass** es für die Herstellung von Lignozellulose-Materialien, die gegen UV-Strahlung schützen, entworfen ist.

## Revendications

1. Textile en fibres celluloses, **caractérisé en ce qu'**il contient des nanolignines, où les nanolignines sont appliquées sur les textiles par l'utilisation d'une technique de foulardage dans une solution de nanolignines, avec un agent auxiliaire composé d'émulsion silicone, en température de 18 - 20°C, par une durée de 2 à 5 minutes, où, après que les textiles soient essorés et soumis de nouveau au foulardage en 8 à 10 passages nouveaux, chaque session de foulardage étant suivie d'un séchage en température de 40 - 60°C, et l'agent auxiliaire est composé d'émulsion comprenante un élastomère silicone à rang de concentration de 5 à 25 g/l.

2. Textile selon la revendication 1, **caractérisé en ce que** la matière première est composée de fibres naturelles de cellulose.

3. Textile selon la revendication 1, **caractérisé en ce que** les nanolignines appliquées sur les textiles procurent une barrière de protection contre le rayonnement UV.

4. Textile selon la revendication 1, **caractérisé en ce que** les nanolignines appliquées sur les textile fournissent des propriétés bactéricides et antistatiques.

5. Textile selon la revendication 1, **caractérisé en ce qu'**il est conçu pour le vêtement protégeant contre la radiation UV, avec des propriétés biocides et antistatiques, particulièrement pour des vêtements d'été et des vêtements de travail utilisés dans des environnements à ensoleillement intensif.

6. Une méthode d'application de nanolignines sur des textiles en celluloses, **caractérisé en ce que** les nanolignines sont appliquées sur les textiles par l'utilisation d'une technique de foulardage usant des nanolignines, avec un agent auxiliaire composé d'émulsion silicone, en température de 18 - 20°C, par une durée de 2 à 5 minutes, où, après que les textiles soient essorés et soumis de nouveau au foulardage en 8 à 10 passages nouveaux, où après chaque session de foulardage ils sont séchés en température de 40 - 60°C, et l'agent auxiliaire est composé d'émulsion comprenante un élastomère silicone à concentration de 5 à 25 g/l.

7. Une méthode selon la revendication 6, **caractérisé en ce que** la méthode utilisée est une application de nanolignines sur des fibres de cellulose naturelle.

8. Utilisation de nanolignines appliquées sur un textile avec l'emploi d'une technique de foulardage usant une solution de nanolignine, avec un agent auxiliaire composé d'émulsion silicone, en température de 18 - 20°C, par une durée de 2 à 5 minutes, où, après que les textiles soient essorés et soumis de nouveau au foulardage en 8 à 10 passages, où après chaque session de foulardage ils sont séchés en température de 40 - 60°C, dans la production de vêtements de protection contre la radiation UV, avec des propriétés biocides et antistatiques, où l'agent auxiliaire est composé d'émulsion comprenante un élastomère silicone à concentration de 5 à 25 g/l.

9. Utilisation selon la revendication 10, **caractérisée en ce que** les textiles sont destinés pour usage dans les vêtements d'été, utilisés dans des environnements à ensoleillement intensif.

10. Utilisation selon la revendication 10, **caractérisée en ce qu'**elle est conçue pour la fabrication de matériaux lignocelulloses de protection contre la radiation UV.
